# EUROPÄISCHE PATENTANMELDUNG

(11) **EP 2 581 266 A2**
(43) Veröffentlichungstag der Anmeldung: **17.04.2013**
(21) Anmeldenummer: 12185209.9
(22) Anmeldetag: 20.09.2012
(51) Int. Cl.: B60Q 9/00, B64F 1/36

(54) **Vorrichtung zur sicheren Annäherung eines Wasser- / Fäkalien-Fahrzeugs an ein Flugzeug**

(30) Priorität: 10.10.2011 DE 102011115378
(71) Anmelder: Losch Airport Equipment GmbH, 70679 Stuttgart (DE)
(72) Erfinder:
(74) Vertreter: Jeck, Anton

(57) **Zusammenfassung**

Vorrichtung zur sicheren Annäherung eines Wasser-/Fäkalien-Fahrzeugs (1) an ein Flugzeug, wobei das Fahrzeug (1) rückwärts an das Flugzeug gefahren wird, an seiner Rückfront mit Sensoren (8, 9) versehen ist, die den Annäherungsabstand ins Führerhaus (2) des Fahrzeugs melden, und mit Alarmmitteln (10) versehen ist, die bei einem gefährlichen Abstand durch die Sensoren (8, 9) betätigt werden. Um den Fahrer des Fahrzeugs bei einem gefährlichen Abstand des Fahrzeugs (1) vom Flugzeug zum Aussteigen zu zwingen, damit er sich ein Bild von der Gefahrensituation machen kann, sind die Alarmmittel (10, 10') nur dadurch abschaltbar, dass er an der Rückfront des Fahrzeugs (1) vorgesehene Abschaltmittel (6) zur Abschaltung der Alarmmittel (10, 10') betätigt.

Die Erfindung betrifft auch Abwandlungen der Vorrichtung und Annäherungsverfahren unter Verwendung der Vorrichtung gemäß der Erfindung.

## Beschreibung

Die Erfindung betrifft eine Vorrichtung zur sicheren Annäherung eines Wasser-/Fäkalien-Fahrzeugs an ein Flugzeug nach dem Oberbegriff des Anspruchs 1 und ein Annäherungsverfahren unter Verwendung dieser Vorrichtung.

Fahrzeuge, die ein Flugzeug mit Frischwasser versorgen oder die von einem Flugzeug Abwasser und Fäkalien aufnehmen, sind allgemein bekannt. Diese Fahrzeuge fahren rückwärts an das Flugzeug heran, wobei es immer wieder zu einem Zusammenstoß des Fahrzeugs mit dem Flugzeug kommen kann. Diese Zusammenstöße ereignen sich trotz der Tatsache, dass die Fahrzeuge bekanntlich mit Sensoren zur Messung des Abstands des Fahrzeugs vom Flugzeug versehen sind.

Es ist eine Reihe von Dokumenten bekannt, die vorwiegend Einparkhilfen für Kraftfahrzeuge (Kfz) betreffen.

So offenbart die DE 43 39 066 A1 eine Einparkhilfe mit Bremseingriff. Der Bremseingriff für das Kfz wird umso größer, je geringer der Abstand vom Hindernis wird, bis schließlich das Kfz nicht mehr weiterbewegt werden kann. Mittels eines Schalters kann der Bremseingriff aufgehoben werden. Dieser Schalter ist im Kfz angeordnet und wird vom sitzenden Führer des Kfz betätigt.

Die. DE 10 302 545 A1 beschreibt das Andocken eines Kfz an eine Kupplung (eines Anhängers) mit Mitteln, die ein Unterstützungssystem zur Erkennung des Abstands und Winkels umfassen und aus mehreren Ultraschallsensoren bestehen können. Diese Mittel ermöglichen ein automatisches Andocken ohne Eingriff des Fahrers, bedingen aber. einen hohen Aufwand.

Die DE 103 43 174 A1 beschreibt die Regelung der Geschwindigkeit eines Kfz; bei dessen Rangieren wird eine Regeleinrichtung verwendet, die mit einer Steuereinrichtung zum Steuern einer Bremseinrichtung und einer Antriebseinrichtung des Kfz verbunden ist. Eine Einschalteinrichtung zur Aktivierung/Deaktivierung der Regeleinrichtung ist vorgesehen.

Die. DE 199 02 487 A1 offenbart einen Rückspiegel, der eine Spiegelscheibe besitzt, hinter der mindestens ein strahlungsemttierendes Anzeigeelement angeordnet ist, das durch diese Scheibe emittiert. Das Anzeigeelement kann durch LEDs gebildet sein, die verschiedenfarbig sein können. Die LEDs sind mit einer Rückfahrhilfe kombinierbar, wobei die LEDs Abstände zu einem Hindernis anzeigen.

Schließlich ist durch die DE 84 27 743 U1 eine Einparkhilfe für ein Kfz bekannt, an dessen Rückseite ein Abstandssensor und in dessen Bereich des Rückfensters eine Warnsignallampe angebracht ist.

Die Aufgabe der Erfindung besteht darin, bei einer Vorrichtung nach dem Oberbegriff des Anspruchs 1 Mittel anzugeben, mit denen die vorbeschriebenen Zusammenstöße mit einfachen Mitteln vermieden werden können.

Diese Aufgabe wird mit den Merkmalen des Anspruchs 1 gelöst.

Wenn nun der Fahrer des Fahrzeugs durch die Alarmeinrichtung auf einen gefährlichen Abstand aufmerksam gemacht wird, ist er gezwungen, auszusteigen und zur Rückfront des Fahrzeugs zu gehen, um sich ein Bild von der Gefahrsituation zu machen und die Alarmeinrichtung abzuschalten.

Gemäß einer vorteilhaften, weiteren Ausbildung der Erfindung ragen aus der Rückfront des Fahrzeugs zwei seitlich angeordnete, stangenförmige Fühler heraus, die an ihren Enden jeweils einen Tragkörper für mindestens einen Sensor tragen.

Gemäß einer weiteren Ausbildung der Erfindung sind die Fühler am Fahrzeug elastisch befestigt. Damit kann beispielsweise Schnee leichter von den Fühlern abgeschüttelt werden.

Gemäß einer bevorzugten, weiteren Ausbildung der Erfindung ist der Tragkörper auf seiner Vorderseite mit vier Fenstern ausgestattet, hinter denen jeweils ein Sensor angeordnet ist, wobei diese Sensoren individuell und winklig zueinander einstellbar sind. Damit kann mindestens eine vom gekrümmten Flugzeugrumpf reflektierte Welle von einem Sensor empfangen werden.

Gemäß einer vorteilhaften, weiteren Ausbildung der Erfindung ist auf jedem Tragkörper und gegebenenfalls zusätzlich im Führerhaus eine Alarmlampe, insbesondere in Form von mindestens einer LED, angeordnet.

Gemäß einer zweckmäßigen, weiteren Ausbildung der Erfindung weist jede auf den Tragkörpern angebrachte Alarmlampe eine helle, weiße LED, eine gelbe LED und eine rote LED auf.

Gemäß einer weiteren Ausbildung der Erfindung sind zusätzlich im Führerhaus eine gelbe LED, eine rote LED und ein akustisches Alarmgerät angeordnet, das durch die Sensoren ausgelöst wird und durch die Abschaltmittel abschaltbar ist. Dadurch wird der Druck auf den Fahrer zum Aussteigen erhöht.

Gemäß einer weiteren Ausbildung der Erfindung ist im Führerhaus eine Alarmlampe, insbesondere in Form von mindestens einer LED, derart angeordnet, dass sie vom Fahrer beim Rückwärtsfahren gut erkennbar ist.

Diese Alarmlampe weist gemäß einer weiteren Ausbildung der Erfindung eine gelbe LED und eine rote LED auf.

Die Erfindung betrifft auch Annäherungsverfahren unter Verwendung der Vorrichtung nach den Ansprüchen 1 bis 9. Eines dieser Verfahren ist dadurch gekennzeichnet, dass ein erstes Signal von den Alarmmitteln bei einem ersten Abstand des Fahrzeugs vom Flugzeug abgegeben wird.

Gemäß einer weiteren Ausbildung des Annäherungsverfahrens gemäß der Erfindung beträgt der erste Abstand 2,5 m. Dabei wird das erste Signal durch Einschalten von mindestens einer gelben LED gebildet

Gemäß einer weiteren Ausbildung des Annäherungsverfahrens gemäß der Erfindung wird ein zweites Signal von den Alarmmitteln bei einem zweiten näheren Abstand des Fahrzeugs vom Flugzeug abgegeben.

Gemäß einer weiteren Ausbildung des Annäherungsverfahrens gemäß der Erfindung beträgt der zweite Abstand 0,7 m. Dabei wird das zweite Signal durch Einschalten von mindestens einer roten LED und gegebenenfalls des akustischen Alarmgeräts gebildet.

Gemäß einer weiteren Ausbildung des Annäherungsverfahrens gemäß der Erfindung ist dadurch gekennzeichnet, dass die Vorrichtung adaptiv aufgebaut ist, und zwar:
- dass in einer ersten Version die Fühler über die Rückfahrleuchte des Fahrzeugs mit Strom versorgt und gegebenenfalls die roten LEDs mit einem akustischen Signalgeber gekoppelt werden,
- dass in einer zweiten Version die Fühler direkt an die Fahrzeugelektronik angeschlossen werden und die roten LEDs mit einem akustischen Signalgeber gekoppelt werden, dessen Signal nur durch Betätigen der Abschalteinrichtung gelöscht werden kann, und
- dass in einer dritten Version alle Signale zusätzlich im Führerhaus angezeigt werden.

Eine Abwandlung des Annäherungsverfahrens gemäß der Erfindung ist dadurch gekennzeichnet, dass ein drittes Signal von den Alarmmitteln bei einem noch näheren Abstand des Fahrzeugs vom Flugzeug abgegeben wird, wobei dieses dritte Signal die Steuereinrichtung veranlasst, das Fahrzeug zu bremsen und den Fahrzeugmotor auszuschalten.

Gemäß einer weiteren Ausbildung des abgewandelten Annäherungsverfahrens gemäß der Erfindung beträgt der noch nähere Abstand 0,4 m.

Gemäß einer weiteren Ausbildung des abgewandelten Annäherungsverfahrens der Erfindung wird das dritte Signal durch Einschalten von mindestens einer roten LED allein gebildet.

Gemäß einer vorteilhaften, weiteren Ausbildung des abgewandelten Annäherungsverfahrens der Erfindung hat das Einschalten der LEDs deren Blinken zur Folge.

Gemäß einer weiteren Ausbildung der Vorrichtung gemäß der Erfindung ist der Tragkörper teilweise mit einem weichen Polstermaterial umgeben. Dadurch können in bestimmten Annäherungssituationen Schäden am Flugzeug vermindert werden.

Gemäß einer weiteren Ausbildung der Vorrichtung gemäß der Erfindung ist um die obere, hintere Kante des Fahrzeugs zu beiden Fahrzeugseiten jeweils ein Bogenfühler angeordnet, der aus einem leistenförmigen, gebogenen Tragkörper aus weichem Material und den Tragkörper am Fahrzeug befestigenden Knautschzonen-Stäben besteht, wobei in den Tragkörper Sensoren verteilt eingelassen sind.

Dadurch können in bestimmten Annäherungssituationen Schäden am Flugzeug weiter vermindert werden.

Gemäß einer weiteren Ausbildung der Vorrichtung gemäß der Erfindung ist am Fühler bzw. Bogenfühler ein Endschalter angeordnet, der unabhängig vom Einlegen des Rückwärtsgangs am Fahrzeug bei Kontakt mit dem Flugzeug sofort die Betätigung der Handbremse des Fahrzeugs veranlasst. Dadurch können in bestimmten Annäherungssituationen Schäden am Flugzeug ausgeschlossen werden.

Die Erfindung wird nun anhand von Ausführungsbeispielen näher erläutert. Es zeigen:

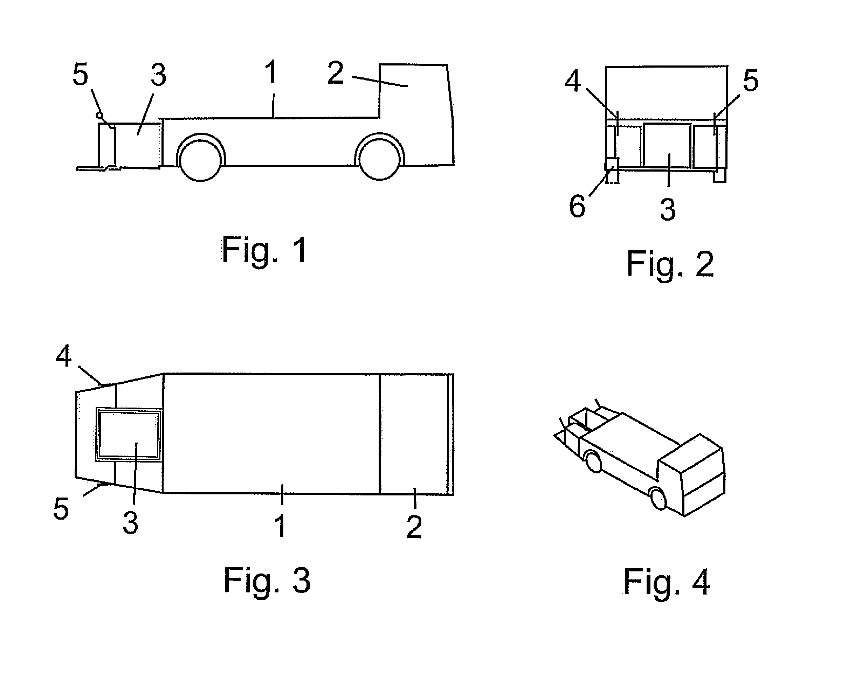

- Fig. 1: eine Seitenansicht eines Fäkalien-Fahrzeugs mit der Vorrichtung gemäß der Erfindung,
- Fig. 2: eine Rückansicht des Fahrzeugs der Fig. 1,
- Fig. 3: eine Draufsicht auf das Fahrzeug der Fig. 1,
- Fig. 4: eine perspektivische Ansicht des Fahrzeugs der Fig. 1,
- Fig. 5: eine Seitenansicht eines an der Rückfront des Fahrzeugs der Fig.1 befestigten Fühlers,
- Fig. 6: eine Rückansicht des Fühlers der Fig. 5,
- Fig. 7: eine Draufsicht auf den Fühler der Fig. 5,
- Fig. 8: eine perspektivische Ansicht des Fühlers der Fig. 5,
- Fig. 9: eine perspektivische Ansicht eines am Fühler angebrachten Tragkörpers für eine abgewandelte Version der Vorrichtung gemäß der Erfindung.
- Fig. 10: eine perspektivische Ansicht eines Fäkalienfahrzeugs mit einer abgewandelten Vorrichtung gemäß der Erfindung und
- Fig. 11: eine vergrößerte Seitenansicht eines bei der Vorrichtung gemäß der Fig. 10 verwendeten Bogenfühlers.

Das motorbetriebene Fäkalienfahrzeug 1 weist ein Führerhaus 2 und im hinteren Bereich einen Fäkalienkübel 3 auf und ist mit einer Vorrichtung zur sicheren Annäherung an ein Flugzeug versehen. Das Fäkalienfahrzeug ist dafür bestimmt, rückwärts an das Flugzeug heranzufahren, um vom Flugzeug Fäkalien in den Fäkalienkübel 3 zu übernehmen. Diese Vorrichtung umfasst zwei seitlich an der Rückfront des Fäkalienfahrzeugs 1 flexibel befestigte, nach hinten und oben herausragende, stangenförmige Fühler 4, 5, eine Abschalteinrichtung 6 an der Rückfront des Fäkalienfahrzeugs 1 und Alarmeinrichtungen im Führerhaus 2.

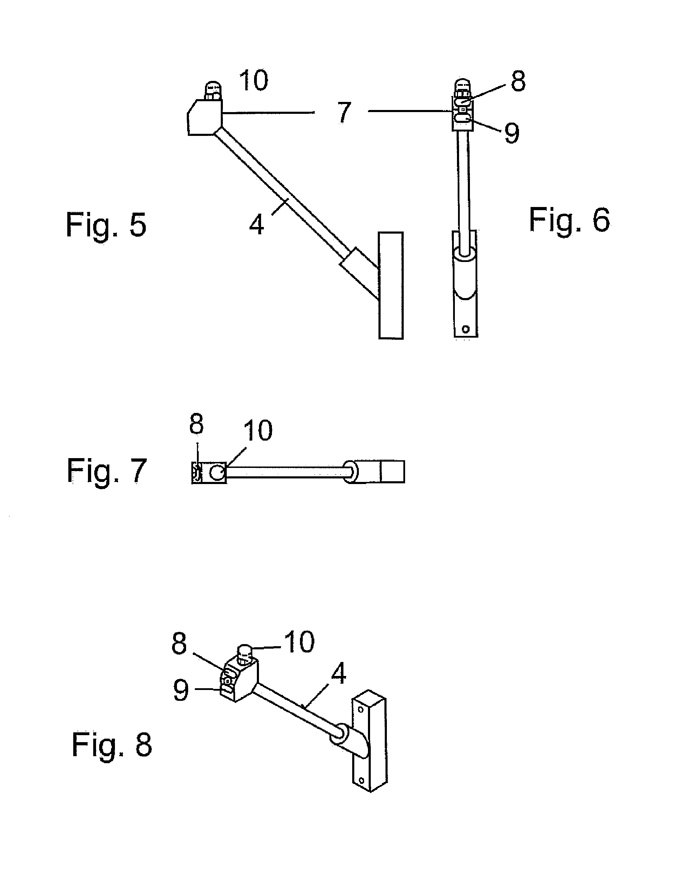

Wie aus den Figuren 5 - 8 hervorgeht, ist am Ende jedes Fühlers 4, 5 ein kastenförmiger Tragkörper 7 (oder Messkopf) angeordnet. Der Tragkörper 7 trägt auf zwei zueinander geneigten Rückflächen jeweils einen Sensor 8, 9, der als Ultraschallsensor ausgebildet ist. Auf dem Tragkörper 7 ist eine Alarmlampe 10 befestigt. Die Sensoren 8, 9 und die Alarmlampe 10 haben Verbindungen zu einer im Führerhaus 2 angeordneten Steuereinrichtung (nicht gezeigt). Jeder Sensor 8, 9 ist mit einem Sender und einem Empfänger versehen. Die vom Sender abgestrahlten Ultraschallwellen werden vom Flugzeug reflektiert, und die reflektierten Ultraschallwellen werden vom Empfänger empfangen. Aus den Laufzeiten der Ultraschallwellen errechnet die Steuereinrichtung den Abstand des Fahrzeugs 1 vom Flugzeug, und die Steuereinrichtung schaltet bei einem gefährlichen Abstand die Alarmlampe 10 und die im Führerhaus angeordneten Alarmeinrichtungen ein.

In der Alarmlampe 10 ist eine weiße LED angeordnet, die beim Rückwärtsfahren des Fäkalienfahrzeugs 1 eingeschaltet wird und als Beleuchtung für die Übergabestelle dient. Ferner sind eine gelbe LED und eine rote LED in der Alarmlampe 10 angeordnet. Eine weitere gelbe LED und eine weitere rote LED sind im Führerhaus 2 angeordnet. Im Führerhaus ist ferner ein akustisches Alarmgerät, beispielsweise eine Hupe, angeordnet, die mit den roten LEDs mitgesteuert wird.

Beim Annähern des Fäkalienfahrzeugs an das Flugzeug laufen folgende Vorgänge ab.

Der Fahrer schaltet im Führerhaus 2 an der mit dem Einschalten des Rückwärtsgangs aktivierten Steuereinrichtung die weißen LEDs ein, so dass er in den Rückspiegeln die Annäherung an das Flugzeug beobachten kann. Wenn der Abstand zum Flugzeug 2,5 m unterschreitet, wird dies von den Sensoren 8, 9 der Steuereinrichtung mitgeteilt, die daraufhin die gelben LEDs in den Alarmlampen 10 und im Führerhaus 2 einschaltet. Der Fahrer wird dadurch zur größten Vorsicht beim Weiterfahren gemahnt. Ist dabei ein Abstand von 0,7 m erreicht, wird dies von den Sensoren zur Steuereinrichtung gemeldet. Diese schaltet daraufhin die roten LEDs in den Alarmlampen 10 und im Führerhaus 2 ein. Gleichzeitig wird das akustische Alarmgerät im Führerhaus 2 eingeschaltet. Aufgrund der leuchtenden roten LEDs und des Getöses des akustischen Alarmgeräts wird der Fahrer zum Anhalten und zum Aussteigen aus dem Fahrzeug 1 gezwungen. Er geht zur Rückfront des Fahrzeugs 1 und macht sich ein Bild von der Gefahrensituation. Wenn er einen zulässigen Abstand vom Flugzeug feststellt, kann er mit der Abschalteinrichtung 6 zumindest die roten LEDs und das akustische Alarmgerät abschalten. Damit ist mit großer Sicherheit ein Zusammenstoßen des Fahrzeugs 1 mit dem Flugzeug vermieden.

Eine Abwandlung der Vorrichtung gemäß der Erfindung kann adaptiv aufgebaut werden.

In einer ersten Version werden nur Fühler 4 am Fahrzeug 1 angebracht, und die Stromversorgung dieser Fühler erfolgt über die Rückfahrleuchten des Fahrzeugs 1. Beim Rückwärtsfahren werden die Sensoren 8, 9 und die Steuereinrichtung im Führerhaus 2 aktiviert. Die gelbe LED leuchtet oder blinkt bei einem Abstand ab 2,5 m, und die rote LED leuchtet oder blinkt bei einem Abstand von 0,7 m. Mehr geschieht nicht. Diese Version hat den großen Vorteil, dass die vormontierten Fühler einfach an die Fahrzeugelektrik angeschlossen werden können. Dabei braucht nur ein Kabel von der Rückfahrleuchte zu den Fühlern gelegt werden. Eine Erweiterung wäre, die rote LED noch mit einem akustischen Signalgeber zu versehen und diesen zusammen mit der roten LED zu steuern. Durch einfaches Vorwärtsfahren des Fahrzeugs 1 werden die Sensoren 8, 9 wieder ausgeschaltet.

In einer zweiten Version ist der elektrische Anschluss der Fühler 4 direkt an die Fahrzeugelektrik angeschlossen, beispielsweise an den Anhängerstecker, so dass die Sensoren und die Steuereinrichtung immer mit Strom versorgt sind. Die gelben LEDs und die roten LEDs werden, wie vorher beschrieben, aktiviert, aber zusätzlich kommt noch ein akustischer Signalgeber dazu, dessen Signal nur durch Betätigen der Abschalteinrichtung 6 gelöscht werden kann.

In einer dritten Version werden alle Signale zusätzlich im Fahrerhaus 2 angezeigt.

Bei einer Abwandlung des Annäherungsverfahrens gemäß der Erfindung ist die Vorderseite eines Tragkörpers 7' mit vier zueinander geneigten Fenstern 7.1 - 7.4 ausgestattet, hinter denen jeweils ein Sensor angeordnet ist. Die vier Sensoren 8.1, 8.2, 9.1, 9.2 haben zueinander verschiedene Abstrahlwinkel. Diese Anordnung berücksichtigt die Tatsache, dass die Rumpffläche des Flugzeugs gekrümmt ist und dass mindestens eine reflektierte Ultraschallwelle von einem Empfänger wieder eingefangen werden muss. Jeder Sensor kann individuell seinen Abständen programmiert werden. Der Tragkörper 7' kann außerdem am Fühler 4, 5 unterschiedlich geneigt und verdreht werden, um einen richtigen und sicheren Abstand einstellen zu können.

Abweichend von den ersten drei Versionen werden mit der Abwandlung des Annährerungsverfahrens drei Messpunkte (Abstände) erfasst, wobei die gelbe LED und die rote LED nur im Führerhaus 2 derart angeordnet sind, dass sie vom Fahrer beim Rückwärtsfahren gut sichtbar sind. Es laufen dann folgende Vorgänge ab:
- der erste Messpunkt liegt bei etwa 2,5 m Abstand des Fahrzeugs 1 vom Flugzeug; die gelbe LED wird dabei eingeschaltet und blinkt, sie signalisiert dem Fahrer, dass er den vorgenannten Abstand zum Flugzeug erreicht hat;
- der zweite Messpunkt liegt bei etwa 0,7 m; es blinken die gelbe LED und die rote LED; dadurch wird die richtige Arbeitsposition angezeigt, in der das Fahrzeug 1 halten müsste;
- ein dritter Messpunkt liegt bei etwa 0,4 m; es blinkt nur noch die rote LED; das bedeutet, dass der Fahrer die richtige Halteposition überfahren hat und zu nahe an das Flugzeug gefahren ist; diese Alarmposition veranlasst die Steuereinrichtung, das Fahrzeug 1 automatisch zu stoppen; dies kann beispielsweise durch Schließen der Handbremse erfolgen; gleichzeitig veranlasst die Steuereinrichtung das Ausschalten des Fahrzeugmotors; daher kann der Fahrer nicht mehr weiterarbeiten und wird gezwungen, auszusteigen und nach hinten zu laufen, um sich die Situation des Fahrzeugs 1 und des Flugzeugs vor Ort genau anzusehen; dann muss der Fahrer die Abschalteinrichtung 8 betätigen, womit die rote LED ausgeschaltet wird und damit in der Folge die Steuereinrichtung die Sperre zurücksetzt und die Motorabschaltung freigibt; der Fahrer kann dann den Motor wieder starten und (etwa 0,3 m) vorwärts bis in die richtige Arbeitsposition fahren, in der die gelbe LED und die rote LED wieder blinken.

Die Erfahrung hat gezeigt, dass durch diesen Zwang zum richtigen Arbeiten erheblich vorsichtiger gefahren wird.

Bei einer weiteren Abwandlung der Vorrichtung gemäß der Erfindung sind die Tragkörper 7, 7' in nicht dargestellter Weise teilweise mit einem weichen Polstermaterial überzogen. Dadurch können durch die Fühler am Flugzeug bedingte Schäden vermindert werden, wenn der Fahrer des Fahrzeugs 1 nicht den Rückwärtsgang eingelegt hat und damit die Steuereinrichtung und die Sensoren nicht aktiviert sind und wenn der Fahrer auch nicht die Handbremse angezogen hat. Aufgrund eines Gefälles des Flugplatzes könnte dann das Fahrzeug auf das Flugzeug zurollen und dies beschädigen.

Um in einem solchen Fall einen Flugzeugschaden völlig auszuschließen, wird der Tragkörper 7, 7' nach einer weiteren Abwandlung gemäß der Erfindung mit einem Endschalter (nicht dargestellt) versehen, der unabhängig vom Einlegen des Rückwärtsgangs bei Kontakt mit dem Flugzeug sofort über die Handbremse das Stoppen des Fahrzeugs veranlasst.

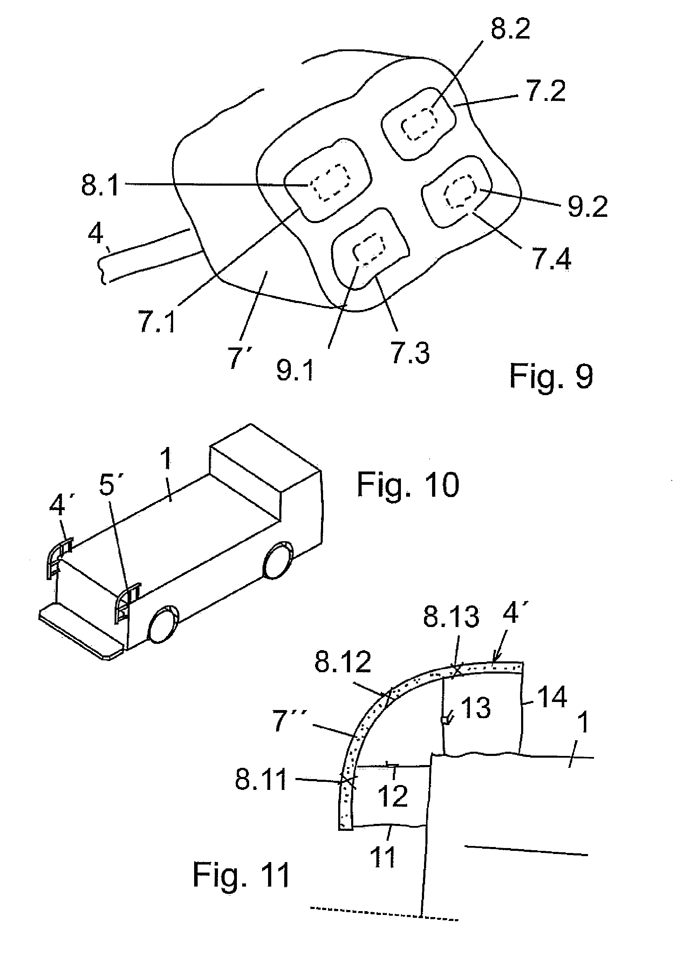

Um einen noch besseren Schutz des Flugzeugs zu gewährleisten, werden bei einer weiteren Abwandlung der Vorrichtung gemäß der Erfindung nach den Figuren 10, 11 statt der vorbeschriebenen Fühler 4, 5 Bogenfühler 4', 5' verwendet, die jeweils aus einem leistenförmigen, gebogenen Tragkörper 7" aus weichem Material bestehen, wobei in den Tragkörper 7" Sensoren 8.11, 8.12, 8.13 verteilt eingelassen sind. Die Tragkörper 7" sind jeweils zu beiden Seiten des Fahrzeugs um die hintere, obere Kante des Fahrzeugs mit Knautschzonen-Stäben 11 - 14 am Fahrzeug befestigt. Zusätzlich kann ein Endschalter (nicht gezeigt) jeweils am Bogenfühler 7" in Form einer Kontaktleiste angebracht sein, die immer aktiviert ist und wie vorbeschrieben sofort die Betätigung der Handbremse veranlasst.

## Patentansprüche

1. Vorrichtung zur sicheren Annäherung eines Wasser-/Fäkalien-Fahrzeugs (1) an ein Flugzeug, wobei das Fahrzeug (1) rückwärts an das Flugzeug gefahren wird, an seiner Rückfront mit Sensoren (8, 9) versehen ist, die den Annäherungsabstand ins Führerhaus (2) des Fahrzeugs melden, und mit Alarmmitteln (10) versehen ist, die bei einem gefährlichen Abstand durch die Sensoren (8, 9) betätigt werden, **dadurch gekennzeichnet,**
**dass** an der Rückfront des Fahrzeugs (1) Abschaltmittel (6) zur Abschaltung der Alarmmittel (10, 10') vorgesehen sind.

2. Vorrichtung nach Anspruch 1,
**dadurch gekennzeichnet,**
**dass** aus der Rückfront des Fahrzeugs zwei seitlich angeordnete, stangenförmige Fühler (4, 5) herausragen, die an ihren Enden jeweils einen Tragkörper (7, 7') für mindestens einen Sensor (8, 9; 8.1, 8.2, 9.1, 9.2) tragen.

3. Vorrichtung nach Anspruch 2,
**dadurch gekennzeichnet,**
**dass** die Fühler (4, 5) am Fahrzeug (1) elastisch befestigt sind.

4. Vorrichtung nach Anspruch 2 oder 3,
**dadurch gekennzeichnet,**
**dass** der Tragkörper (7') auf seiner Vorderseite mit vier Fenstern ausgestattet ist, hinter denen jeweils ein Sensor (8.1, 8.2, 9.1, 9.2) angeordnet ist, und dass diese Sensoren individuell und winklig zueinander einstellbar sind.

5. Vorrichtung nach Anspruch 2 oder 3,
**dadurch gekennzeichnet,**
**dass** auf jedem Tragkörper (7) und gegebenenfalls zusätzlich im Führerhaus (2) eine Alarmlampe (10), insbesondere in Form von mindestens einer LED, angeordnet ist.

6. Vorrichtung nach Anspruch 4,
**dadurch gekennzeichnet,**
**dass** jede auf den Tragkörpern angebrachte Alarmlampe (10) eine helle, weiße LED, eine gelbe LED und eine rote LED aufweist.

7. Vorrichtung nach einem der Ansprüche 2 bis 5,
**dadurch gekennzeichnet,**
**dass** zusätzlich im Führerhaus (2) eine gelbe LED, eine rote LED und ein akustisches Alarmgerät angeordnet sind, das durch die Sensoren (8, 9) ausgelöst wird und durch die Abschaltmittel (6) abschaltbar ist.

8. Vorrichtung nach einem der Ansprüche 1 bis 3,
**dadurch gekennzeichnet,**
**dass** im Führerhaus (2) eine Alarmlampe (10'), insbesondere in Form von mindestens einer LED derart angeordnet ist, dass sie vom Fahrer beim Rückwärtsfahren gut erkennbar ist.

9. Vorrichtung nach Anspruch 8,
**dadurch gekennzeichnet,**
**dass** die Alarmlampe (10') eine gelbe LED und eine rote LED aufweist.

10. Annäherungsverfahren unter Verwendung der Vorrichtung nach den Ansprüchen 1 bis 9,
**dadurch gekennzeichnet,**
**dass** ein erstes Signal von den Alarmmitteln (10, 10') bei einem ersten Abstand des Fahrzeugs (2) vom Flugzeug abgegeben wird.

11. Annäherungsverfahren nach Anspruch 10,
**dadurch gekennzeichnet,**
**dass** der erste Abstand 2,5 m beträgt.

12. Annäherungsverfahren nach Anspruch 10 oder 11,
**dadurch gekennzeichnet,**
**dass** das erste Signal durch Einschalten von mindestens einer gelben LED gebildet wird.

13. Annäherungsverfahren nach einem der Ansprüche 10 bis 12,
**dadurch gekennzeichnet,**
**dass** ein zweites Signal von den Alarmmitteln (10, 10') bei einem zweiten näheren Abstand des Fahrzeugs (1) vom Flugzeug abgegeben wird.

14. Annäherungsverfahren nach Anspruch 13,
**dadurch gekennzeichnet,**
**dass** der zweite Abstand 0,7 m beträgt.

15. Annäherungsverfahren nach Anspruch 13 oder 14
**dadurch gekennzeichnet,**
**dass** das zweite Signal durch Einschalten von mindestens einer roten LED und gegebenenfalls des akustischen Alarmgeräts gebildet wird.

16. Annäherungsverfahren nach einem der Ansprüche 10 bis 15,
**dadurch gekennzeichnet,**
**dass** die Vorrichtung adaptiv aufgebaut ist, und zwar:
**dass** in einer ersten Version die Fühler (4) über die Rückfahrleuchte des Fahrzeugs (1) mit Strom versorgt und gegebenenfalls die roten LEDs mit einem akustischen Signalgeber gekoppelt werden,
**dass** in einer zweiten Version die Fühler (4) direkt an die Fahrzeugelektronik angeschlossen werden und die roten LEDs mit einem akustischen Signalgeber gekoppelt werden, dessen Signal nur durch Betätigen der Abschalteinrichtung (6) gelöscht werden kann, und
**dass** in einer dritten Version alle Signale zusätzlich im Führerhaus (2) angezeigt werden.

17. Annäherungsverfahren nach Anspruch 16,
**dadurch gekennzeichnet,**
**dass** ein drittes Signal von den Alarmmitteln (10') bei einem noch näheren Abstand des Fahrzeugs (1) vom Flugzeug abgegeben wird, wobei dieses dritte Signal die Steuereinrichtung veranlasst, das Fahrzeug zu bremsen und den Fahrzeugmotor auszuschalten.

18. Annäherungsverfahren nach Anspruch 17,
**dadurch gekennzeichnet,**
**dass** der Abstand 0,4 m beträgt.

19. Annäherungsverfahren nach Anspruch 17 oder 18,
**dadurch gekennzeichnet,**
**dass** das dritte Signal durch Einschalten von mindestens einer roten LED allein gebildet wird.

20. Annäherungsverfahren nach Anspruch 12, 15 und 19,
**dadurch gekennzeichnet,**
**dass** das Einschalten der LEDs deren Blinken zur Folge hat.

21. Vorrichtung nach einem der Ansprüche 1 bis 9,
**dadurch gekennzeichnet,**
**dass** der Tragkörper (7, 7') teilweise mit einem weichen Polstermaterial umgeben ist.

22. Vorrichtung nach Anspruch 1,
**dadurch gekennzeichnet,**
**dass** um die obere, hintere Kante des Fahrzeugs zu beiden Fahrzeugseiten jeweils ein Bogenfühler (4', 5') angeordnet ist, der aus einem leistenförmigen, gebogenen Tragkörper (7") aus weichem Material und den Tragkörper (7") am Fahrzeug (1) befestigenden Knautschzonen-Stäben (11-14) besteht, wobei in den Tragkörper (7") Sensoren (8.11, 8.12, 8.13) verteilt eingelassen sind.

23. Vorrichtung nach einem der Ansprüche 1 bis 9 und 21, 22,
**dadurch gekennzeichnet,**
**dass** am Fühler (4, 5) bzw. Bogenfühler (4', 5') ein Endschalter angeordnet ist, der unabhängig vom Einlegen des Rückwärtsgangs am Fahrzeug (1) bei Kontakt mit dem Flugzeug sofort die Betätigung der Handbremse des Fahrzeugs (1) veranlasst.
